# EUROPEAN PATENT APPLICATION

(11) **EP 4 327 933 A1**
(43) Date of publication of application: **28.02.2024**
(21) Application number: 22791627.7
(22) Date of filing: 11.04.2022
(51) Int. Cl.: B01J 20/22, A23L 3/3436, B01D 53/14, B01J 20/10, B01J 20/20, B01J 20/32

(54) **OXYGEN ABSORBER**

(30) Priority: 20.04.2021 JP 2021071271
(71) Applicant: MITSUBISHI GAS CHEMICAL COMPANY, INC., Chiyoda-ku Tokyo 100-8324 (JP)
(72) Inventor: SOMEYA, Masao, Tokyo 125-8601 (JP); YOSHIDA, Yota, Tokyo 125-8601 (JP); WATANABE, Keisuke, Tokyo 125-8601 (JP)
(74) Representative: Hoffmann Eitle
(86) International application number: PCT/JP2022/017448
(87) International publication number: WO 2022/224853

(57) **Abstract**

Provided is an oxygen absorber including an unsaturated group-containing liquid oligomer, an oxygen absorption-promoting substance, a carrier supporting the unsaturated group-containing liquid oligomer and the oxygen absorption-promoting substance, gas-absorbing inorganic particles, and activated carbon. An amount of the unsaturated group-containing liquid oligomer adsorbed on the gas-absorbing inorganic particles is 6.5 parts by mass or less per 100 parts by mass of the gas-absorbing inorganic particles.

## Description

### TECHNICAL FIELD

The present invention relates to an oxygen absorber.

### BACKGROUND ART

A method of using an oxygen scavenger is known as a storage technique for food products, pharmaceutical products, and the like. In this method, a stored article and an oxygen scavenger are enclosed and sealed in a sealed container having gas-barrier properties, thereby allowing the oxygen scavenger to absorb oxygen inside the sealed container. Thus, an atmosphere in the sealed container can be kept substantially in an oxygen-free state. As a function, the oxygen scavenger is preferably small in size and able to absorb large amounts of oxygen. In other words, an oxygen scavenger composition with a large amount of oxygen absorption per unit volume is preferred.

Exemplary oxygen scavengers include: iron-based oxygen scavengers that include iron (iron powder) as their main agent; and non-iron-based oxygen scavengers that include ascorbic acid, glycerin, and the like as their main agents. Among the non-iron-based oxygen scavengers, unsaturated hydrocarbons, unsaturated hydrocarbon compounds, unsaturated fatty acids, and unsaturated fatty acid compounds such as fats and oils are known as oxygen absorbers that do not require moisture for oxygen absorption.

Such oxygen absorbers that do not require moisture can be used in the storage of not only foods but also metallic components, electronic components, electrical components, precision components, magnetic and optical components, jewelry, weapons, aircraft, automobiles, glass products, rubber products, photographic films, pharmaceuticals, pressed flowers, paintings, ancient documents, excavated artifacts, and the like.

For example, Patent Document 1 discloses, for the purpose of producing an oxygen-absorbing composition that exhibits a high oxygen-absorbing capability, is easy to produce, and generates minimal gas and odor, an oxygen-absorbing composition composed of an oxygen absorber and a gas absorbing agent, the oxygen absorber having, supported on a carrier, a material containing, as a main agent, an unsaturated group-containing liquid hydrocarbon oligomer having a specific molecular weight and viscosity, and the material also containing an oxygen absorption-promoting substance.

### CITATION LIST

### PATENT DOCUMENT

Patent Document 1: JP 10-113555 A

### SUMMARY OF INVENTION

### TECHNICAL PROBLEM

Patent Document 1 discloses an oxygen-absorbing composition that is an oxygen absorber not requiring moisture and yet exhibiting minimal odor. However, pharmaceuticals, medical supplies, and sanitary products in particular are applied directly to the human body or come into contact with the face for a long period of time, and therefore an oxygen absorber used to store such products and supplies must be odorless on an extremely high level, and is required to have an even higher odorless level than that of the oxygen-absorbing composition disclosed in Patent Document 1. On the other hand, the storage environment of pharmaceuticals, medical products, and sanitary products must be strictly controlled, and therefore a higher oxygen absorption property is also required.

Accordingly, an issue to be solved by the present invention is to provide an oxygen absorber that exhibits excellent oxygen absorption performance without requiring moisture and can suppress the generation of odors.

### SOLUTION TO PROBLEM

The present inventors discovered that this issue can be solved by an oxygen absorber that contains an unsaturated group-containing liquid oligomer, an oxygen absorption-promoting substance, a carrier, gas-absorbing inorganic particles, and activated carbon with the content of the unsaturated group-containing liquid oligomer, which is adsorbed on the gas-absorbing inorganic particles, and the content of the gas-absorbing inorganic particles being set to a specific ratio.

The present invention relates to the following oxygen absorber, a method for producing the oxygen absorber, and an oxygen absorber package.
<1> An oxygen absorber including an unsaturated group-containing liquid oligomer, an oxygen absorption-promoting substance, a carrier supporting the unsaturated group-containing liquid oligomer and the oxygen absorption-promoting substance, gas-absorbing inorganic particles, and activated carbon, wherein an amount of the unsaturated group-containing liquid oligomer adsorbed on the gas-absorbing inorganic particles is 6.5 parts by mass or less per 100 parts by mass of the gas-absorbing inorganic particles.
<2> The oxygen absorber according to <1>, wherein the gas-absorbing inorganic particles are at least one type selected from the group consisting of silicates having an average pore size of 1 to 150 Å, oxides of alkaline earth metals, and hydroxides of alkaline earth metals.
<3> The oxygen absorber according to <1> or <2>, wherein the gas-absorbing inorganic particles are a silica gel.
<4> The oxygen absorber according to any one of <1> to <3>, wherein the oxygen absorption-promoting substance is at least one substance selected from the group consisting of transition metal salts and radical initiators.
<5> The oxygen absorber according to any one of <1> to <4>, wherein the carrier is a silicate having an average pore size of from 200 to 5000 Å.
<6> The oxygen absorber according to any one of <1> to <5>, wherein the unsaturated group-containing liquid oligomer is at least one type selected from the group consisting of a liquid butadiene-based oligomer, a liquid isoprene-based oligomer, a liquid acetylene-based oligomer, a liquid chloroprene-based oligomer, a liquid unsaturated polyester resin, and a natural rubber.
<7> The oxygen absorber according to any one of <1> to <6>, further containing a polyethylene powder.
<8> The oxygen absorber according to any one of <1> to <7>, wherein a mass ratio of the unsaturated group-containing liquid oligomer in the oxygen absorber to the gas-absorbing inorganic particles in the oxygen absorber, that is, the mass ratio of [(unsaturated group-containing liquid oligomer)/(gas-absorbing inorganic particles)], is from 10/90 to 30/70.
<9> A method for producing an oxygen absorber described in any one of <1> to <8>, the method including: making a mixture of an unsaturated group-containing liquid oligomer and an oxygen absorption-promoting substance be supported on a carrier, and subsequently, mixing the carrier, gas-absorbing inorganic particles, and an activated carbon to produce an oxygen absorber.
<10> An oxygen absorber package including the oxygen absorber described in any one of <1> to <8> and an air-permeable packaging material containing the oxygen absorber.

### ADVANTAGEOUS EFFECTS OF INVENTION

The oxygen absorber of the present invention exhibits excellent oxygen absorption performance without requiring moisture and can suppress the generation of odors. Therefore, the oxygen absorber of the present invention is suitably used particularly in the storage of pharmaceuticals, medical supplies, sanitary supplies, and the like.

### DESCRIPTION OF EMBODIMENTS

An embodiment according to the present invention will be described below. The content of the present invention is not limited to the embodiment described below.

Note that in the present specification, a phrase of "A to B" indicating a numerical range means "greater than or equal to A and less than or equal to B" (in the case of A < B), or "less than or equal to A and greater than or equal to B" (in the case of A > B). Furthermore, in the present invention, a combination of preferable aspects is a more preferable aspect.

### Oxygen Absorber

An oxygen absorber of the present invention contains an unsaturated group-containing liquid oligomer, an oxygen absorption-promoting substance, a carrier supporting the unsaturated group-containing liquid oligomer and the oxygen absorption-promoting substance, gas-absorbing inorganic particles, and activated carbon, and an amount of the unsaturated group-containing liquid oligomer adsorbed on the gas-absorbing inorganic particles is 6.5 parts by mass or less per 100 parts by mass of the gas-absorbing inorganic particles.

### Liquid Oligomer Having Unsaturated Group

The oxygen absorber of the present invention contains an unsaturated group-containing liquid oligomer. In addition, the unsaturated group-containing liquid oligomer is supported on a below-described carrier, and the amount of the unsaturated group-containing liquid oligomer adsorbed on gas-absorbing inorganic particles to be described later is 6.5 parts by mass or less per 100 parts by mass of the gas-absorbing inorganic particles.

The unsaturated group-containing liquid oligomer used in the oxygen absorber of the present invention is preferably at least one selected from the group consisting of a liquid butadiene-based oligomer, a liquid isoprene-based oligomer, a liquid acetylene-based oligomer, a liquid chloroprene-based oligomer, a liquid unsaturated polyester resin, and a natural rubber, and is more preferably a liquid butadiene-based oligomer from the perspectives of cost and odor. These liquid oligomers having an unsaturated group are not necessarily required to be a single substance, and may be a mixture of two or more types or may be copolymerized. In addition, a trace amount of impurities such as a solvent mixed in at the time of production is allowed within a reasonable range.

Moreover, the unsaturated group-containing liquid oligomer used in the present invention may have a substituent in addition to the unsaturated group, such as a halogen group, a hydroxy group, a carbonyl group, an ether group, a carboxy group, or an ester group. For example, the liquid oligomer may be substituted with a functional group such as alicyclic hydrocarbon group, an aromatic hydrocarbon group, a hydroperoxy group, an epoxy group, an oxo group, a hydroxymethyl group, an acyl group, an amino group, an imino group, a nitrilo group, a nitro group, a nitroso group, an amide group, an imide group, a cyano group, an isocyano group, a cyanato group, an isocyanato group, a diazo group, an azido group, a hydrazino group, an azo group or a heterocyclic group.

The liquid butadiene-based oligomer is preferably a liquid butadiene oligomer in which 65% or greater of the bonds in the molecular structure are 1, 4-bonds, and such liquid butadiene-based oligomer does not have a side chain and thus has a low viscosity even among liquid butadiene oligomers having the same molecular weight (the bonds in the molecular structure can be measured by nuclear magnetic resonance analysis). In addition, the liquid butadiene-based oligomer is more preferably a liquid butadiene oligomer in which 65% or greater of the 1,4 bonds are 1,4-cis bonds with lower viscosity and of the same molecular weight.

The unsaturated group-containing liquid oligomer may be diluted with a non-oxygen-absorbing diluent and then used.

Such a diluent is preferably an organic compound that does not have an easily oxidizable functional group such as an unsaturated group, a hydroxy group, or an aldehyde group and which is mixed with the unsaturated group-containing liquid oligomer to reduce the viscosity of the unsaturated group-containing liquid oligomer. The non-oxygen-absorbing diluent is not particularly limited as long as the diluent satisfies the above-described conditions, and examples thereof include linear saturated hydrocarbons such as decane, tridecane, tetradecane and n-paraffin; alkylnaphthenes such as liquid paraffin; and naphthenic acid. These non-oxygen-absorbing diluents need not be a single substance, and may be a mixture of two or more substances. The ratio of the non-oxygen-absorbing diluent to the unsaturated group-containing liquid oligomer is preferably in a range of 1000 parts by mass or less of the non-oxygen-absorbing diluent per 100 parts by mass of the unsaturated group-containing liquid oligomer.

The number average molecular weight of the unsaturated group-containing liquid oligomer is preferably from 150 to 4000, more preferably from 300 to 3000, and even more preferably from 500 to 2500.

The viscosity of the unsaturated group-containing liquid oligomer at 25°C is preferably from 100 to 4000 mPa·s, more preferably from 150 to 2000 mPa·s, and even more preferably from 200 to 1000 mPa·s.

When the number average molecular weight and the viscosity are in the abovementioned ranges, the oxygen absorber exhibits excellent oxygen absorption performance and is easily produced, and odors can be suppressed.

In the oxygen absorber, the content of the unsaturated group-containing liquid oligomer is preferably from 2 to 40 mass%, more preferably from 5 to 30 mass%, and even more preferably from 7 to 20 mass%.

### Oxygen Absorption-Promoting Substance

The oxygen absorber of the present invention contains an oxygen absorption-promoting substance. The oxygen absorption-promoting substance is supported on a carrier, which will be described later.

Examples of the oxygen absorption-promoting substance used in the oxygen absorber of the present invention include metal compounds and radical initiators that promote oxidation of the unsaturated group-containing liquid oligomer.

The oxygen absorption-promoting substance is preferably at least one selected from the group consisting of transition metal salts and radical initiators.

The transition metal salt is preferably at least one transition metal salt selected from the group consisting of Cu, Fe, Co, Ni, Cr and Mn, and is more preferably at least one transition metal salt selected from the group consisting of Mn and Fe in consideration of oxygen absorption performance and safety.

As the transition metal salt, for example, inorganic salts such as sulfates, chloride salts, and nitrates, organic salts such as fatty acid salts and acetylacetone metal salts, and the like can be suitably used, but from the viewpoint of miscibility with the unsaturated group-containing liquid oligomer, the transition metal salt is preferably an organic salt, and is more preferably a fatty acid salt.

Examples of the radical initiator include catechols, azo compounds such as 2,2-azobisisobutyronitrile, and peroxides such as benzoyl peroxide.

Further, the oxygen absorption-promoting substance is more preferably contained in the oxygen absorber in a state of being uniformly mixed with the unsaturated group-containing liquid oligomer.

The oxygen absorption-promoting substance may be used by being dissolved or dispersed in a diluent in order to be uniformly mixed with the unsaturated group-containing liquid oligomer.

The diluent for diluting such an oxygen absorption-promoting substance may be the above-mentioned non-oxygen-absorbing diluent or an oil having an unsaturated group, but in order to increase affinity with the unsaturated group-containing liquid oligomer and further enhance the oxygen absorption property, an oil having an unsaturated group is preferably used as the diluent.

As the oil having an unsaturated group, an unsaturated fatty acid or an oil or fat containing an unsaturated fatty acid is preferable, and specific examples that can be used include unsaturated fatty acids such as oleic acid, linoleic acid, linolenic acid, arachidonic acid, parinaric acid, dimer acid or ricinoleic acid, and oils and fats containing an ester of these unsaturated fatty acids, such as linseed oil, soybean oil, tung oil, rice bran oil, sesame oil, cottonseed oil, rapeseed oil and tall oil, and also esters and metal salts. As the unsaturated fatty acid, fatty acids produced from vegetable oils and animal oils, such as, for example, linseed oil fatty acid, soybean oil fatty acid, tung oil fatty acid, rice bran oil fatty acid, sesame oil fatty acid, cottonseed oil fatty acid, rapeseed oil fatty acid and tall oil fatty acid, can also be used. Among these, those having a low liquid viscosity are easily mixed and thus are preferable.

The content of the oxygen absorption-promoting substance in the oxygen absorber is preferably from 0.001 to 0.2 mass%, more preferably from 0.005 to 0.1 mass%, and even more preferably 0.01 to 0.06 mass%.

In the oxygen absorber, the amount of the oxygen absorption-promoting substance relative to 100 parts by mass of the unsaturated group-containing liquid oligomer is preferably from 0.01 to 2.0 parts by mass, more preferably from 0.05 to 1.0 parts by mass, and even more preferably from 0.1 to 0.5 parts by mass.

When a diluent is used, the concentration of the oxygen absorption-promoting substance in the solution containing the diluent is preferably from 1 to 50 mass%, more preferably from 2 to 20 mass%, and even more preferably from 3 to 10 mass%.

### Carrier

The oxygen absorber of the present invention contains a carrier. The carrier supports the unsaturated group-containing liquid oligomer and the oxygen absorption-promoting substance.

The carrier preferably has a large surface area and expands the contact area between the unsaturated group-containing liquid oligomer and oxygen. In addition, the carrier preferably has a large pore size, a large pore volume, and a small bulk density because such a carrier can support a large amount of the unsaturated group-containing liquid oligomer.

Examples of such a carrier include a silicate having an average pore size of 200 to 5000 Å and wood flour, and the carrier is preferably a silicate having an average pore size of 200 to 5000 Å.

The average pore size of the silicate is more preferably from 500 to 4000 Å. The average pore size can be measured by the Brunauer-Emmett-Teller (BET) multipoint method or the like using, for example, a commercially available specific surface area/pore distribution measuring device ("BELSORP-Max" available from MicrotracBEL Corp.).

Examples of the silicate having an average pore size of 200 to 5000 Å include diatomaceous earth, zeolite, molecular sieves, sepiolite, cristobalite, porous glass, silica, activated clay, acid clay, and vermiculite, and diatomaceous earth is preferable.

From the perspective of handling ease and filling ease, the average particle size of the carrier is preferably from 0.1 to 5 mm, and is more preferably from 0.5 to 3 mm. The average particle size can be measured by, for example, a commercially available laser diffraction/scattering type particle size distribution measuring device ("LA-960", available from Horiba, Ltd.).

Also, the bulk density of the carrier is preferably from 0.2 to 1.0 g/mL, more preferably from 0.3 to 0.7 g/mL, and even more preferably from 0.4 to 0.6 g/mL. Note that the bulk density can be measured in accordance with JIS K6721:1977 (withdrawn), for example.

The content of the carrier in the oxygen absorber is preferably from 4 to 50 mass%, more preferably from 10 to 40 mass%, and even more preferably from 14 to 35 mass%.

In the oxygen absorber, the amount of the carrier relative to 100 parts by mass of the unsaturated group-containing liquid oligomer is preferably from 100 to 1000 parts by mass, more preferably from 120 to 500 parts by mass, and even more preferably from 150 to 250 parts by mass.

### Gas-Absorbing Inorganic Particles

The oxygen absorber of the present invention contains gas-absorbing inorganic particles. The gas-absorbing inorganic particles are mainly particles that absorb a gas other than oxygen, and specifically, are particles that absorb highly volatile low number-average molecular weight substances contained in the unsaturated group-containing liquid oligomer before undergoing an oxygen absorption reaction with the unsaturated group-containing liquid oligomer serving as the main agent, or gas components produced in the oxygen absorption reaction, such as hydrogen, carbon monoxide, carbon dioxide, hydrocarbons, aldehydes, ketones and carboxylic acids, and corrosive gas components such as hydrogen sulfide and ammonia in the closed atmosphere, and the gas-absorbing inorganic particles are particles that achieve this purpose. In the oxygen absorber of the present invention, the amount of the unsaturated group-containing liquid oligomer that is adsorbed on the gas-absorbing inorganic particles is 6.5 parts by mass or less per 100 parts by mass of the gas-absorbing inorganic particles.

Examples of the gas-absorbing inorganic particles include silicates having an average pore size of from 1 to 150 Å, oxides and hydroxides of alkaline earth metals, aluminum oxide, polymeric adsorbents, sodium sulfate, sodium carbonate, potassium carbonate, soda lime, organic acid salts, and organic amines.

Examples of the silicates having an average pore size of 1 to 150 Å include synthetic zeolites represented by molecular sieves; natural zeolites such as mordenite and erionite; clay minerals such as perlite, acid clay, and activated clay; porous glass such as silica gel; magnesium silicate; aluminum silicate; and ascarite. The silicate having an average pore size of from 1 to 150 Å is preferably a porous glass, and more preferably silica gel. The average pore size can be measured by the Brunauer-Emmett-Teller (BET) multipoint method or the like using, for example, a commercially available specific surface area/pore distribution measuring device ("BELSORP-Max" available from MicrotracBEL Corp.).

Examples of oxides of alkaline earth metals include calcium oxide, barium oxide, and magnesium oxide.

Examples of the alkaline earth metal hydroxides include sodium hydroxide, potassium hydroxide, and slaked lime.

The gas-absorbing inorganic particles are preferably at least one selected from the group consisting of silicates having an average pore size of 1 to 150 Å, oxides of alkaline earth metals, and hydroxides of alkaline earth metals, more preferably a silicate having an average pore size of 1 to 150 Å, even more preferably a silicate having an average pore size of 1 to 100 Å, and yet even more preferably silica gel.

An oxygen absorber that can absorb not only the gas and odors, but also moisture and that is suitable for the storage of products that dislike moisture can be produced by using a silicate having an average pore size of from 1 to 150 Å. In addition, silica gel is robust and highly safe and exhibits good handling properties and filling properties, and therefore silica gel is preferably used.

The average particle size of the gas-absorbing inorganic particles is preferably from 0.1 to 3 mm, more preferably from 0.2 to 1 mm, and even more preferably from 0.3 to 0.6 mm. The gas-absorbing inorganic particles having an average particle size in the above range may be appropriately selected from commercially available products, or may be prepared by classification using a sieve according to the desired average particle size. In addition, the average particle size can be measured by, for example, a commercially available laser diffraction/scattering type particle size distribution measuring device ("LA-960", available from Horiba, Ltd.).

Moreover, the bulk density of the gas-absorbing inorganic particles is preferably from 0.3 to 1.5 g/mL, more preferably from 0.4 to 1.0 g/mL, and even more preferably from 0.5 to 0.8 g/mL. Note that the bulk density can be measured in accordance with JIS K6721:1977 (withdrawn), for example.

The gas-absorbing inorganic particles are not necessarily a single substance, and may be a mixture of two or more types.

The content of the gas-absorbing inorganic particles in the oxygen absorber is preferably from 5 to 60 mass%, more preferably from 10 to 50 mass%, and even more preferably from 20 to 40 mass%.

Some of the organic components such as the unsaturated group-containing liquid oligomer supported on the carrier may be adsorbed by the gas-absorbing inorganic particles before the oxygen scavenger is used. Through this, the odor suppressing effect of the gas-absorbing inorganic particles is inhibited, and therefore the amount of the unsaturated group-containing liquid oligomer adsorbed on the gas-absorbing inorganic particles is preferably smaller. The amount of the unsaturated group-containing liquid oligomer adsorbed on the gas-absorbing inorganic particles is, in relation to 100 parts by mass of the gas-absorbing inorganic particles, 6.5 parts by mass or less, preferably 5.9 parts by mass or less, more preferably 4.0 parts by mass or less, even more preferably 3.0 parts by mass or less, still even more preferably 2.0 parts by mass or less, and yet even more preferably 1.0 parts by mass or less.

Note that the amount of the unsaturated group-containing liquid oligomer adsorbed on the gas-absorbing inorganic particles can be determined by the method described in Examples.

When the amount of the unsaturated group-containing liquid oligomer adsorbed on the gas-absorbing inorganic particles is within the above range, excellent oxygen absorption performance and suppression of odor generation can be achieved. The reason for this is not clear but is assumed to be as follows. The unsaturated group-containing liquid oligomer is easily adsorbed by the gas-absorbing inorganic particles, but when the amount of the unsaturated group-containing liquid oligomer adsorbed by the odor-adsorbing portion of the gas-absorbing inorganic particles is small, the ability of the gas-absorbing inorganic particles to adsorb an odor component can be sufficiently obtained. At the same time, the amount of the component adsorbed by the activated carbon is reduced, the odor component adsorption ability thereof is sufficiently ensured, and the ability to absorb oxygen by the remaining unsaturated group-containing liquid oligomer is also obtained, and it is conceivable that thereby, the effect of the present invention is exhibited.

The mass ratio of the unsaturated group-containing liquid oligomer in the oxygen absorber to the gas-absorbing inorganic particles in the oxygen absorber, that is, the mass ratio of [(unsaturated group-containing liquid oligomer)/(gas-absorbing inorganic particles)], is from 10/90 to 30/70. and is more preferably from 15/85 to 25/75.

### Activated Carbon

The oxygen absorber of the present invention contains activated carbon.

It is conceivable that the activated carbon in the oxygen absorber of the present invention has a function of suppressing the generation of odor, which is the effect of the present invention, and of also promoting an oxidation reaction of the unsaturated group-containing liquid oligomer.

The activated carbon may be wood-based, coconut shell-based, coal-based, or the like, and is preferably a coconut shell-based activated carbon.

The properties of the activated carbon are not particularly limited, but from the perspective of handling ease when producing the oxygen absorber, a particulate or powdered activated carbon having high fluidity is suitably used, and an activated carbon having a shape that is close to spherical is more preferable. In addition, from the perspective of handling ease when producing the oxygen absorber, the average particle size of the particulate activated carbon is preferably from 0.01 mm to 2 mm, and more preferably from 0.1 mm to 1 mm. Furthermore, the average particle size of the powdered activated carbon is preferably from 10 µm to 1000 µm, and more preferably from 100 µm to 500 µm. Any particles of the activated carbon can be used regardless of whether they are primary particles, agglomerated particles or granules, as long as the particles have a particle size in the range described above. The activated carbon having a particle size in the range described above can be used singly in one kind, or several kinds thereof having different particle sizes can be mixed in any ratio. The average particle size can be measured by, for example, a commercially available laser diffraction/scattering type particle size distribution measuring device ("LA-960", available from Horiba, Ltd.).

The content of the activated carbon in the oxygen absorber is preferably from 1 to 40 mass%, more preferably from 5 to 30 mass%, and even more preferably from 10 to 20 mass%.

### Polyethylene Powder

In addition to the unsaturated group-containing liquid oligomer, the oxygen absorption-promoting substance, the carrier, the gas-absorbing inorganic particles, and the activated carbon described above, the oxygen absorber of the present invention may contain other substances within a range that does not impair the effects of the present invention.

Among these other substances, the oxygen absorber of the present invention preferably contains a polyethylene powder.

As the oxygen absorber absorbs oxygen, the oxygen absorber generates heat and experiences an increase in temperature, and therefore depending on the product to be stored, deterioration due to localized heating may become a difficulty, or a difficulty such as swelling or deformation of the oxygen absorber package or packaging container may occur. Here, since polyethylene has a crystalline portion and a melting point, when the polyethylene is added to the oxygen absorber, the heat of fusion is locally captured during melting, and the heat generation is suppressed.

The polyethylene constituting a polyethylene powder is preferably a polyethylene having a crystallinity of 50% or greater, more preferably a polyethylene having a crystallinity of 60% or greater, and even more preferably a polyethylene having a crystallinity of 65% or greater.

The crystallinity of polyethylene is a value calculated by a density method [JIS K6760:1995 (withdrawn) and "Polyethylene Resins, Lecture on Plastic Materials", Nikkan Kogyo Shimbun, Ltd., 22 (1969)].

Since polyethylene is a crystalline polymer and the crystalline portion is structurally more stable than the amorphous portion, as the crystallinity increases, the density becomes higher, which is preferable. The polyethylene used in the present invention may be copolymerized with another monomer, such as propylene or 1-butene.

The heat of fusion per unit mass of the polyethylene is preferably 190 mJ/mg or more, and the melting point is preferably from 80°C to 150°C.

The degree of crystallinity, heat of fusion, and melting point of the polyethylene can be measured by, for example, a commercially available differential scanning calorimeter ("DSC-60A" available from Shimadzu Corporation).

The content of the polyethylene powder in the oxygen absorber is preferably from 3 to 50 mass%, more preferably from 5 to 40 mass%, and even more preferably from 10 to 30 mass%.

### Method for Producing Oxygen Absorber

The method for producing the oxygen absorber of the present invention is not particularly limited, but is preferably a method including making a mixture of an unsaturated group-containing liquid oligomer and an oxygen absorption-promoting substance be supported on a carrier, and subsequently, mixing the carrier, gas-absorbing inorganic particles, and activated carbon to produce the oxygen absorber.

By first preparing a mixture of the unsaturated group-containing liquid oligomer and the oxygen absorption-promoting substance and making the mixture be supported on the carrier, migration of the unsaturated group-containing liquid oligomer to the gas-absorbing inorganic particles can be effectively prevented, and the oxygen absorber of the present invention can be effectively produced.

Preferably, the mixture of the unsaturated group-containing liquid oligomer and the oxygen absorption-promoting substance is supported on the carrier, and subsequently, the carrier, the gas-absorbing inorganic particles, and the activated carbon are mixed.

When the oxygen absorber contains a polyethylene powder, the polyethylene powder is preferably mixed with the carrier, the gas-absorbing inorganic particles, and the activated carbon at the same time. That is, when the oxygen absorber contains a polyethylene powder, the method for producing the oxygen absorber of the present invention is preferably a method including making a mixture of an unsaturated group-containing liquid oligomer and an oxygen absorption-promoting substance be supported on a carrier, and subsequently, mixing the carrier, the gas-absorbing inorganic particles, the activated carbon, and the polyethylene powder to produce the oxygen absorber.

The device used for mixing is not particularly limited, and specific examples that can be used include a Nauta mixer (available from Hosokawa Micron Corporation), a conical mixer (available from Ono Kagaku Kikai K.K.), a vertical granulator (available from Powrex Corp.), and a high speed mixer (available from EarthTechnica Co., Ltd.).

As a method of storing the oxygen absorber of the present invention, the oxygen absorber is preferably stored in a container having gas barrier properties as an oxygen absorber package described later. The container with gas barrier properties is preferably filled with an inert gas. The temperature during storage is preferably 50°C or lower, more preferably 40°C or lower, and even more preferably 30°C or lower. The lower limit of the storage temperature is not particularly limited, but is, for example, -20°C or higher. By storing the oxygen absorber at a low temperature in an inert gas, the amount of the unsaturated group-containing liquid oligomer adsorbed on the gas-absorbing inorganic particles can be reduced. Therefore, even after storage, the oxygen absorber can exhibit excellent oxygen absorption performance and suppress the generation of odors.

### Oxygen Absorber Package

An oxygen scavenger package of the present invention includes the oxygen absorber described above and an air-permeable packaging material containing the oxygen absorber.

### Packaging Material

Examples of the packaging material include a packaging material having a bag shape formed by bonding two sheets of an air-permeable packaging material to each other, a packaging material having a bag shape formed by bonding one sheet of an air-permeable packaging material and one sheet of a non-air-permeable packaging material to each other, and a packaging material having a bag shape formed by folding one sheet of an air-permeable packaging material and sealing edges other than the folded portion.

Here, when the air-permeable packaging material and the non-air-permeable packaging material each have a quadrilateral shape, examples of the packaging material include a packaging material having a bag shape formed by overlapping two sheets of an air-permeable packaging material and heat-sealing their four sides, a packaging material having a bag shape formed by overlapping one sheet of an air-permeable packaging material and one sheet of a non-air-permeable packaging material and heat-sealing their four sides, and a packaging material having a bag shape formed by folding one sheet of an air-permeable packaging material and heat-sealing its three sides other than the folded portion. Furthermore, the packaging material may be a packaging material having a bag shape formed by forming an air-permeable packaging material into a tubular shape and heat-sealing both ends and the trunk portion of the resulting tubular body.

The shape of the packaging material is preferably at least one selected from the group consisting of a bag shape, a three-sided seal shape, a four-sided seal shape, a stick shape, a cylindrical shape, and a box shape, and is more preferably at least one selected from the group consisting of a stick shape, a cylindrical shape, and a box shape.

### Air-permeable Packaging Material

As the air-permeable packaging material, a packaging material through which oxygen and carbon dioxide permeates is selected. Of these, a packaging material having an air permeability resistance not greater than 600 seconds, more preferably not greater than 90 seconds by a Gurley tester method is suitably used. Here, the air permeability resistance refers to a value measured by a method in accordance with JIS P 8117 (1998). More specifically, it refers to a time period required for 100 mL of air to permeate through an air-permeable packaging material using a Gurley densometer available from Toyo Seiki Seisaku-sho, Ltd.

As the air-permeable packaging material, in addition to paper and nonwoven fabric, a plastic film, to which air permeability is imparted, is used. Examples of such a plastic film include a laminate film produced by laminating and bonding a film of polyethylene terephthalate, polyamide, polypropylene, polycarbonate, or the like, and a film of polyethylene, an ionomer, polybutadiene, ethylene acrylic acid copolymer, ethylene methacrylate copolymer, ethylene vinyl acetate copolymer, or the like as a sealing layer. These laminates can also be used as the air-permeable packaging material.

As the method of imparting air permeability, various methods can be employed, in addition to punching with a cold needle or a heat needle. When air permeability is imparted by punching, the air permeability can be freely adjusted by a diameter, the number, a material, and the like of holes to be punched.

The thickness of the laminated film is preferably from 50 to 1000 µm, more preferably from 50 to 500 µm, and particularly preferably from 60 to 250 µm. In this case, as compared to a case where the thickness deviates from the range described above, the packaging material can be a packaging material that retains strength and has an excellent heat sealing property and packaging suitability.

### EXAMPLES

Hereinafter, the present embodiment will be described in detail using Examples and Comparative Examples, but the present embodiment can be modified as appropriate as long as the present embodiment achieves the effects of the present invention. Note that "parts" in Examples and Comparative Examples refer to parts by mass when not specifically stated.

### Analysis and Evaluation

### Amount of Liquid Butadiene Oligomer Adsorbed on Silica Gel (Amount of Unsaturated Group-Containing Liquid Oligomer Adsorbed on Gas-Absorbing Inorganic Particles)

Silica gel particles were separated from the oxygen absorbers of Examples and Comparative Examples and subjected to carbon, hydrogen, and nitrogen elemental analysis (CHN analysis) using the CHN elemental analyzer MTC-6 (available from Yanaco Technical Science Co., Ltd.) as an analyzer to determine the carbon ratio in the silica gel, and the carbon ratio in the silica gel was used as the amount of liquid polybutadiene adsorbed on the silica gel (the amount of the unsaturated group-containing liquid oligomer adsorbed on the gas-absorbing inorganic particles).

In Table 1, "0.2 (mass% or less)" indicates that the content was equal to or less than the lower detection limit in the analysis by this method.

The CHN analysis was carried out under the following conditions.
Apparatus: Yanaco CHN coder MT-6
Standard reagent: antipyrine (standard for organic element analysis, available from Kishida Chemical Co., Ltd.)
Sample furnace temperature: 950°C
Combustion furnace temperature: 850°C
Absorption furnace temperature: 500°C
Reduction furnace temperature: 550°C
Pump thermostatic bath temperature: 55°C
Detector thermostatic bath temperature: 100°C
Helium gas flow rate: 200 mL/min
Oxygen gas injection rate: 25 mL/min

### Oxygen Absorption Performance Test

Each of the oxygen absorber packages of the Examples and Comparative Examples was individually enclosed in an aluminum foil-laminated plastic film bag (available from Sun A Kaken Co., Ltd.: size 220 mm × 300 mm, hereinafter referred to as an "aluminum barrier bag") together with 500 mL of 25°C air. The oxygen concentration (initial oxygen concentration) in the aluminum barrier bag was measured at this time. The bag was stored at 25°C, and after 28 days, the oxygen concentration in the aluminum barrier (oxygen concentration after storage) was measured, and the oxygen reduction amount (initial oxygen concentration - oxygen concentration after storage) was calculated. A greater oxygen reduction amount indicates more excellent oxygen absorption performance.

The oxygen concentration was measured using a gas analyzer ("Check Mate 3" available from MOCON, Inc.). The oxygen concentration was measured by inserting a hollow needle located at the tip of a sampling tube made of silicon and attached to the gas analyzer into the aluminum barrier bag from a sampling rubber sheet attached in advance to the aluminum barrier bag, and then measuring the oxygen concentration.

### Odor Test

Three odor evaluation panelists smelled the odor in the aluminum barrier bag after the oxygen absorption performance test, and determined the intensity of the odor generated from the oxygen absorber using a six-step odor method (according to the following criteria). Table 1 shows the average value (rounded to the nearest whole number) of the evaluation scores by the three evaluation panelists.
0: Odorless
1: Barely perceptible odor (detection threshold)
2: Weak odor that can be identified (recognition threshold)
3: Easily detectable odor (tolerable odor)
4: Strong odor (unbearable odor)
5: Intense odor (very unbearable odor)

In the examples, a score of 3 or less is acceptable, and a smaller score indicates a more excellent odor suppressing effect.

### Production of Oxygen Absorber and Oxygen Absorber Package

### Example 1

An amount of 19.0 g of liquid butadiene oligomer (Polyvest 110: available from Evonik Japan Co., Ltd.) and 1.7 g of 4 mass% tall oil fatty acid manganese/tall oil fatty acid (available from Toei Chemical Industry Co., Ltd.) were mixed to produce a homogeneous solution. 0.25 g of this solution was impregnated into 0.51 g of diatomaceous earth (catalog values: particle size of 1 mm, bulk density from 0.5 to 0.6 g/mL).

Next, the diatomaceous earth impregnated with the above solution, 0.38 g of granular activated carbon (coconut shell-type activated carbon, catalog values: particle size from 0.25 to 0.85 mm), 0.86 g of silica gel particles (catalog values: particle size from 20 to 40 mesh, bulk density of 0.74 g/mL, average pore size of 24 Å), and 0.5 g of powdered polyethylene (catalog values: crystallinity of 65%, melting point of 107°C) were placed in a nitrogen-purged 100 mL flask and mixed by shaking by hand, and an oxygen absorber was produced.

A small bag of an air-permeable packaging material (laminated film of paper/open-pore polyethylene, thickness: 0.4 mm, size: 26 mm × 62 mm, air permeation resistance: 27 seconds) was filled with the resulting oxygen absorber, after which the periphery of the small bag was heat sealed to produce an oxygen absorber package.

The analyses and evaluations described above were carried out immediately after the oxygen absorber package was produced. The results are shown in Table 1.

### Example 2

An oxygen absorber package was produced in the same manner as in Example 1. The resulting oxygen absorber package was inserted into a nitrogen-purged aluminum barrier bag and sealed, and then stored for 30 days at atmospheric pressure (0.10 MPa) and 25°C, after which the aluminum barrier bag was opened, and the above analyses and evaluations were carried out. The results are shown in Table 1.

### Example 3

An oxygen absorber package was produced in the same manner as in Example 1. The resulting oxygen absorber package was inserted into a nitrogen-purged aluminum barrier bag and sealed, and then stored for 90 days at atmospheric pressure (0.10 MPa) and 25°C, after which the aluminum barrier bag was opened, and the above analyses and evaluations were carried out. The results are shown in Table 1.

### Example 4

An oxygen absorber package was produced in the same manner as in Example 1. The resulting oxygen absorber package was inserted into a nitrogen-purged aluminum barrier bag and sealed, and then stored for 750 days at atmospheric pressure (0.10 MPa) and 25°C, after which the aluminum barrier bag was opened, and the above analyses and evaluations were carried out. The results are shown in Table 1.

### Comparative Example 1

An oxygen absorber package was produced in the same manner as in Example 1. The resulting oxygen absorber package was inserted into a nylon bag, and vacuum-degassed and sealed. The nylon bag was then inserted into a nitrogen-purged aluminum barrier bag and sealed, and then stored at 60°C for 21 days, after which the aluminum barrier bag and the nylon bag were opened, and the above analyses and evaluations were carried out. The results are shown in Table 1.

### Comparative Example 2

An oxygen absorber package was produced in the same manner as in Example 1. The resulting oxygen absorber package was inserted into a nitrogen-purged aluminum barrier bag and sealed, and then stored for 60 days at atmospheric pressure (0.10 MPa) and 60°C, after which the aluminum barrier bag was opened, and the above analyses and evaluations were carried out. The results are shown in Table 1.

**Table 1**

| | Oxygen absorber | Evaluation results | |
|---|---|---|---|
| | Amount of liquid butadiene oligomer adsorbed on silica gel (mass%) | Oxygen absorption performance test (oxygen reduction amount) (mL) | Odor test (6-step odor method) |
| Example 1 | 0.2 or less | 50 | 1 |
| Example 2 | 2.7 | 48 | 1 |
| Example 3 | 5.9 | 45 | 2 |
| Example 4 | 6.0 | 35 | 3 |
| Comparative Example 1 | 10.2 | 35 | 5 |
| Comparative Example 2 | 7.5 | 45 | 4 |

As is clear from the results in Table 1, the oxygen absorbers of Examples exhibit excellent oxygen absorption performance without requiring moisture and can suppress the generation of odor. Therefore, the oxygen absorber of the present invention can be suitably used particularly in the storage of pharmaceuticals, medical supplies, sanitary supplies, and the like.

## Claims

1. An oxygen absorber comprising:
an unsaturated group-containing liquid oligomer;
an oxygen absorption-promoting substance;
a carrier supporting the unsaturated group-containing liquid oligomer and the oxygen absorption-promoting substance;
gas-absorbing inorganic particles;
and activated carbon,
an amount of the unsaturated group-containing liquid oligomer adsorbed on the gas-absorbing inorganic particles being 6.5 parts by mass or less per 100 parts by mass of the gas-absorbing inorganic particles.

2. The oxygen absorber according to claim 1, wherein the gas-absorbing inorganic particles are at least one type selected from the group consisting of silicates having an average pore size of 1 to 150 Å, oxides of alkaline earth metals, and hydroxides of alkaline earth metals.

3. The oxygen absorber according to claim 1 or 2, wherein the gas-absorbing inorganic particles are a silica gel.

4. The oxygen absorber according to any one of claims 1 to 3, wherein the oxygen absorption-promoting substance is at least one substance selected from the group consisting of transition metal salts and radical initiators.

5. The oxygen absorber according to any one of claims 1 to 4, wherein the carrier is a silicate having an average pore size of 200 to 5000 Å.

6. The oxygen absorber according to any one of claims 1 to 5, wherein the unsaturated group-containing liquid oligomer is at least one type selected from the group consisting of a liquid butadiene-based oligomer, a liquid isoprene-based oligomer, a liquid acetylene-based oligomer, a liquid chloroprene-based oligomer, a liquid unsaturated polyester resin, and a natural rubber.

7. The oxygen absorber according to any one of claims 1 to 6, further comprising a polyethylene powder.

8. The oxygen absorber according to any one of claims 1 to 7, wherein a mass ratio of the unsaturated group-containing liquid oligomer in the oxygen absorber to the gas-absorbing inorganic particles in the oxygen absorber, that is, the mass ratio of [(unsaturated group-containing liquid oligomer)/(gas-absorbing inorganic particles)], is from 10/90 to 30/70.

9. A method for producing an oxygen absorber described in any one of claims 1 to 8, the method comprising:
making a mixture of an unsaturated group-containing liquid oligomer and an oxygen absorption-promoting substance be supported on a carrier; and subsequently,
mixing the carrier, gas-absorbing inorganic particles, and an activated carbon to produce an oxygen absorber.

10. An oxygen absorber package comprising:
the oxygen absorber described in any one of claims 1 to 8; and
an air-permeable packaging material containing the oxygen absorber.
